(19) **Europäisches Patentamt / European Patent Office / Office européen des brevets**

(11) **EP 1 704 047 B1**

(12) **EUROPEAN PATENT SPECIFICATION**

(45) Date of publication and mention
of the grant of the patent:
**09.09.2009 Bulletin 2009/37**

(51) Int Cl.:
**B32B 5/18** (2006.01)    **B32B 27/32** (2006.01)

(21) Application number: **04815785.3**

(86) International application number:
**PCT/US2004/043783**

(22) Date of filing: **28.12.2004**

(87) International publication number:
**WO 2005/068177 (28.07.2005 Gazette 2005/30)**

(54) **MULTILAYER POLYMER SHEETS**

MEHRLAGIGE POLYMERFOLIEN

FEUILLES DE POLYMERE MULTICOUCHE

(84) Designated Contracting States:
**AT BE BG CH CY CZ DE DK EE ES FI FR GB GR HU IE IS IT LI LT LU MC NL PL PT RO SE SI SK TR**

(30) Priority: **06.01.2004 US 534470 P**

(43) Date of publication of application:
**27.09.2006 Bulletin 2006/39**

(73) Proprietor: **DOW GLOBAL TECHNOLOGIES INC.
Midland MI 48674 (US)**

(72) Inventors:
• **BRUNNER, Kurt
CH-8038 Zuerich (CH)**

• **MISPREUVE, Henri, L.
CH-8855 Wangen (CH)**

(74) Representative: **Hayes, Adrian Chetwynd
Boult Wade Tennant,
Verulam Gardens
70 Gray's Inn Road
London WC1X 8BT (GB)**

(56) References cited:
**EP-A- 0 353 496**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to multilayer sheets which are suitable for packaging applications, and articles manufactured from multilayer sheets.

Carton board containers are used in a wide range of applications for packaging household materials such as cereals, frozen food, ready meals, cleaning and laundry products, cosmetics, and pharmaceuticals.

These containers are typically constructed of various types of carton board such as folding box board, white lined chipboard, solid bleach board, and solid unbleached board. Although carton boards offer an economical method of packaging various goods, they generally suffer from poor organoleptic properties, have poor barrier properties, poor moisture resistance and poor chemical resistance. Such problems may be resolved by applying plastic or metal laminates to the surfaces of the carton board, but the resulting composite material is difficult to recycle and expensive to manufacture.

Furthermore, it is often desirable to make packaging attractive to the consumer by incorporating complex forms into the design. However it is difficult to form complex shapes from carton board sheets.

Therefore there is a continued need for materials suitable for manufacturing packaging containers which have excellent mechanical stability, excellent moisture and chemical resistance, which are preferably recyclable and possess good printability and haptic properties.

EP-A-0 353 496 discloses a flexible, creased material comprising a layer of foamed propylene based material sandwiched between two outer layers made of a thermoplastic material selected from propylene-ethylene copolymer or propylene homopolymer, where the two outer layers comprise between 50 and 80% of inorganic, particulate filler.

The present invention relates to a multilayer sheet comprising at least one foamed propylene polymer layer and at least one non-foamed polymer layer, wherein the non-foamed polymer layer comprises a polymer comprising units derived from a 1-alkene monomer and is an unfilled layer, characterized in that multilayer sheet has properties which satisfy the following relationships:

$$0.2 < T < 2 \qquad (1a)$$

wherein T is the total thickness of the multilayer sheet measured according to the American Society of Standards and Materials (ASTM) standard ASTM D645M-97 expressed in millimetres; and

$$100 < G < 500 \qquad (1b)$$

wherein G is the grammage of the multilayer sheet determined according to ASTM D646-96 (re-approved 2001) expressed in grams per square metre (g/m2); and

$$S \geq 2 \times 10^{-7} \, G^{3.1872} \qquad (1c)$$

wherein S is the geometric mean bending moment of the multilayer sheet expressed in milliNewton metres (mN m) calculated from the following relationship:

$$S = (Sm \ Sc)^{0.5} \qquad (1d)$$

wherein Sm is the maximum bending moment in the plane of the multilayer sheet expressed in milliNewton metres (mN m) and determined according to the two-point method described in the Deutsches Institut für Normung e.V. (DIN) standard DIN 53121: 1996-12 and Sc is the bending moment measured perpendicularly to the direction selected for the determination of Sm in the plane of the multilayer sheet expressed in milliNewton metres (mN m) and determined according to the two-point method described in DIN 53121: 1996-12.

The present invention further relates to a multilayer sheet comprising at least one foamed propylene polymer layer and at least one non-foamed polymer layer, and wherein the non-foamed polymer layer comprises a polymer, comprising units derived from an 1-alkene monomer, and is a filled layer, prepared from a polymer composition comprising up to 40 weight percent of a filler based on the total weight of the composition, and wherein the multilayer sheet has properties which satisfy the following relationships:

$$0.2 < T < 2 \qquad (1a),$$

wherein T is the total thickness of the multilayer sheet, measured according to ASTM D645-97, and expressed in millimetres; and

$$100 < G < 500 \qquad (1b),$$

wherein G is the grammage of the multilayer sheet determined according to ASTM D646-96, and expressed in grams per square metre; and

$$S \geq 2 \times 10^{-7} G^{3.1872} \qquad (1c),$$

wherein S is the geometric mean bending moment of the multilayer sheet, expressed in milliNewton metres, and calculated from the following relationship:

$$S = (Sm \ Sc)^{0.5} \qquad (1d),$$

wherein Sm is the maximum bending moment in the plane of the multilayer sheet, expressed in milliNewton metres, and determined according to the two-point method described in DIN 53121 : 1996-12, and Sc is the bending moment measured perpendicularly to the direction of Sm in the plane of the multilayer sheet, and expressed in milliNewton metres, and determined according to the two-point method described in DIN 53121 : 1996-12.

Figure 1 represents a schematic diagram of apparatus used to produce crease mark.

Figure 2 is a schematic illustration of a packaging article comprising a cut and creased multilayer sheet.

Figure 3 represents a photograph illustrating the cross section through a multilayer sheet, containing an inner foamed layer and two outer non-foamed layers. The thickness of each of the outer layers is 75 micrometers and 87 micrometers (794 $\mu$m - 707 $\mu$m), respectively. The thickness of the foamed layer is 632 micrometers (707 $\mu$m - 75 $\mu$m).

The multilayer sheet of the present invention is particularly suitable for shaping by cutting, scoring or creasing on a carton board conversion machine such as an Autoplaten® SP Evoline 102E plus (supplied by Bobst S.A., Switzerland), and for thermoforming into complex shapes.

The total thickness of the multilayer sheet of the present invention satisfies the following relationship:

$$0.2 < T < 2 \qquad (1a)$$

wherein T is the total thickness of the multilayer sheet measured according to ASTM D645-97 expressed in millimetres (mm). The minimum thickness of the sheet should not be less than 0.2 mm to avoid technical difficulties when the multilayer sheet is used in place of carton board in carton board conversion machines such as the Autoplaten® SP Evoline 102E plus. An example of a technical difficulty which may occur if the multilayer sheet is too thin is that the sheet may deform when the sheet is fed to the carton board conversion machine causing blockage of the machine. The maximum thickness of the multilayer sheet is not critical for the practice of the invention but for reasons of economy should not be greater than 2 mm. In a preferred embodiment of the invention the thickness of the sheet T is from 0.3 to 1.5 mm, more preferably from 0.5 to 1.5 mm, which provides the best compromise between structural stability requirements of the sheets and articles and the cost of manufacture of the sheet and the articles.

Another important parameter of the multilayer sheet of the present invention is the grammage G of the multilayer sheet determined according to ASTM D646-96 (re approved 2001) expressed in grams per square metre (g/m$^2$). The grammage G of the multilayer sheet satisfies the following relationship:

$$100 < G < 500 \qquad (1b) .$$

The range of grammage G given in equation (1b) provides a good compromise between structural stability requirements of the sheet and articles manufactured therefrom and the cost of manufacture of the sheet and the articles.

In a preferred embodiment the grammage is greater than or equal to 200 grams per square metre, and in a more preferred embodiment the grammage is greater than or equal to 240 grams per square metre. In yet another preferred embodiment the grammage is less than or equal to 450 grams per square metre, and in a more preferred embodiment the grammage is less than, or equal to, 410 grams per square metre.

S is the geometric mean bending moment of the laminated sheet expressed in milliNewton metres (mN m) calculated from the following relationship:

$$S = (Sm \ Sc)^{0.5} \qquad (1d)$$

wherein Sm is the maximum bending moment in the plane of the multilayer sheet expressed in milliNewton metres (mN m) and determined according to the two-point method described in DIN 53121 : 1996 12.

The two-point method (Zweipunkt-Verfahren) is described in section 5.1 of DIN 53121 : 1996 12. The two-point method is modified for use with samples taken from multilayer sheets of the present invention in the following manner:

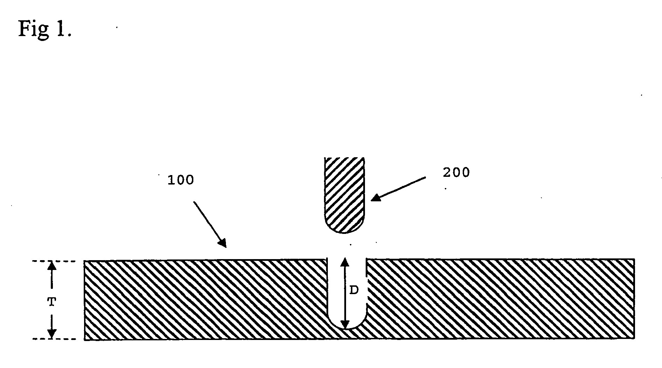

1. The test is conducted on a test apparatus with a rotating clamp as illustrated in Figure 1 (Bild 1) of DIN 53121 : 1996 12.

2. The sample of the multilayer sheet to be tested is cut to a length of 50 millimetres and to a width of 38 millimetres.

3. The sample of the multilayer sheet is subjected to a bending angle of 7.5 degrees for all thicknesses of the sheet.

Sc is the bending moment measured perpendicularly to the direction, D, of the maximum bending moment, Sm, in the plane of the multilayer sheet expressed in milliNewton metres (mN m) and determined according to the two-point method described in DIN 53121 : 1996 12.

If the multilayer sheet is produced by a process such as co-extrusion then the direction of the maximum bending moment in the plane of the multilayer sheet is generally the machine direction of the co-extruded multilayer sheet. If it is not possible to determine the machine direction of the multilayer sheet then the direction of the maximum bending moment in the plane of the multilayer sheet can be determined by taking several samples from the multilayer sheet at different angles to a selected reference line in the plane of the sheet from the multilayer sheet. The two-point method described above is then applied to the samples and the value of bending moment is then plotted against the angle to the reference line so that the maximum value of bending moment in the plane of the multilayer sheet, Sm, can be determined by graphical interpolation or similar means. If the bending moment of the multilayer sheet is isotropic, that is the measured value is the same in all directions in the plane of the multilayer sheet, then any direction in the plane of the multilayer sheet can be taken as the direction of the maximum bending moment.

The geometric mean bending moment of the multilayer sheet, S, and the grammage of the multilayer sheet; G, are important parameters for determining the suitability of the sheet for use in a cardboard conversion machine. In order for the multilayer sheet of the present invention to be useful in carton board conversion machines the value of the geometric mean bending moment of the multilayer sheet, S, satisfies the following relationship:

$$S \geq 2 \times 10^{-7} G^{3.1872} \quad (1c)$$

In a preferred embodiment the geometric mean bending moment, S, also satisfies the following relationship:

$$S \geq 0.0021 G^{1.7573} \quad (2)$$

In a preferred embodiment of the present invention, the multilayer sheet has at least one crease or score mark. The term "crease" as used herein means a line or mark that can be made by folding the multilayer sheet. The crease mark can be produced by any means, but generally a crease rule is used which is an round-edged metal strip more generally used in the paperboard industry to form a crease or bending line in paperboard or boxboard stock.

The term "score mark" as used herein means a material cut in the multilayer sheet to facilitate bending, creasing, folding, or tearing of the sheet. The score mark can be produced by any means, but generally a cut-scoring rule is used which is a metal strip, one edge of which is ground to the center or a side face, and which is more generally used in the paperboard industry for partially cutting through boxboard stock, for example, making a partial cut for the purpose of forming a fold line.

For many applications of the multilayer sheets it is desirable that the sheet is creased or scored. A device which can be adapted for testing the creasability of the multilayer sheet of the present invention is described in ASTM D 1894 01 (page 3, figure 1c).

In order to prepare the samples for creasability testing, a 50 mm wide and 150 mm long sample is cut from the multilayer sheet. The sample is cut such that the long axis is parallel to the direction, D, of maximum bending moment, $S_m$. For multilayer sheets which are produced by co-extrusion the machine direction is generally parallel to the direction, D, of maximum bending moment, $S_m$

The sample is creased across the width of the strip, the crease being made 45 mm from one end of the strip. The apparatus for producing the crease mark is shown schematically as item 200 in Figure 1. The crease rule used to produce the crease has a width of 1.36 millimetres. The creasing edge of the crease rule is a circular segment of radius 1.1 millimetres. For the purposes of the test the sample is creased to a predetermined depth. The depth of the crease, D, expressed in millimetres, is dependent upon the grammage G of the sample and is calculated using the following equation :

$$D = 0.00109 G \quad (3)$$

The test sample is fixed to the surface of the table of the test apparatus with the long side corresponding to that of the table. The sample may be fixed by any suitable means such as with double-faced adhesive tape or with a clamp. The fixing means is applied to the long section of the creased sample up to a distance of 1 millimetre from the crease so that the distal, creased end of the sample is not fixed to the surface of the table and is therefore free to bend.

A cable is then attached to the distal, creased end of the sample by a suitable means of attachment such as by gluing, whilst taking care not to bend the crease. The cable is aligned along the centre of the long axis of the sample to the pulley and load cell of the test apparatus.

The test apparatus is then started and the creased end of the sample is then pulled into an upright position at a rate of 125 millimetres per minute until the angle of the crease is 90 degrees.

The sample is then maintained in this position for 60 seconds, after which time the bending force which is required to maintain the angle of the crease of the sample at 90 degrees is recorded.

The bending force on the sample is then released and the sample is allowed to return to its original position. The sample is then allowed to relax for 180 seconds.

The test is repeated three times, and the average bending force, F, measured in Newtons which is required to maintain the angle of the crease of the sample at 90 degrees is then calculated from the resulting three values of the recorded bending force.

In a preferred embodiment of the invention the average bending force, F, is less than 3 Newton, more preferably less than 2.5 Newton, and most preferably less than 2 Newton.

Multilayer sheets which are creased or scored are useful for the manufacture of articles such as packaging articles. The crease or score marks can be produced on a carton board conversion machine. In a preferred embodiment of the invention the multilayer sheet comprises at least one crease.

The maximum curl of the sheet is an important parameter when considering the use of such a sheet with a carton board conversion machine. Sheets with a high value of curl may cause operational problems when used in a carton board conversion machine, such as jamming. In a preferred embodiment of the present invention the maximum curl of the multilayer sheet measured according to the method described in ASTM D 4825 - 97 (Reapproved 2002) is less than 50 millimetres, more preferably less than 20 millimetres. The test method is modified for use with the samples taken from the multilayer sheet in the following manner:

1. The test is conducted on a sample of a single sheet, the sample being circular and having a diameter of 216 millimetres.

2. The test is conducted under ambient conditions.

3. The sample is placed on the gauge and rotated and the test procedure carried out until the maximum curl is found.

The multilayer sheet of the present invention has excellent barrier properties. The water vapour transmission rates disclosed in this specification are measured in grams per square metre per 24 hours ($g/m^2$ 24 h) and are determined according to the Technical Association of the Pulp and Paper Industry (TAPPI) standard test method T-523 om-82 and is typically less than 2.0 $g/m^2$ 24 h. Oxygen transmission rates are measured in cubic centimetres per square metre per 24 hours ($cm^3/m^2$ 24h) and are determined according ASTM D-3985 at ambient temperature and pressure and is typically less than 6000 $cm^3/m^2$ 24h.

The multilayer sheet of the present invention comprises a foamed polymer layer wherein the foamed polymer layer is produced from a foamable polymer composition comprising units derived from propylene. Useful foamable polymer compositions and foams for producing the foamed propylene polymer layer are taught in US patent Nos. 6,544,450; 6,440,241; 6,417,242; 6,417,240, and 6,251,319.

The term "foamable propylene polymer composition" as used herein means a composition which comprises a polymer in which at least 50 weight percent of its monomeric units are derived directly from propylene and which is used to make the foamed layer of the multilayer sheet of the present invention.

As used herein, the term "propylene homopolymers" means polymers derived from the reaction of propylene monomer, whereas the term "propylene interpolymers" means polymers derived from the reaction of propylene monomer and at least one monomer other than propylene and includes, for example, random, block, and grafted copolymers and terpolymers.

The polymer of the foamable propylene polymer composition may be comprised solely of one or more propylene homopolymers, one or more propylene interpolymers, blends of one or more of each of propylene homopolymers and propylene interpolymers, and blends of the previously mentioned propylene polymers with polymers which do not comprise propylene. The propylene polymer of the foamable propylene polymer composition comprises at least 50, more preferably at least 80, and most preferably about 100, weight percent propylene monomer derived units based upon the total weight of the polymer in the foamable propylene polymer composition.

Appropriate propylene interpolymers include interpolymers of propylene and an alkene selected from the group consisting of ethylene, 1-alkenes have from 1 to 10 carbon atoms, and dienes having from 4 to 10 carbon atoms. Propylene interpolymers also include random terpolymers of propylene and 1-alkenes selected from the group consisting of ethylene and 1-alkene monomers having 4 to 10 carbon atoms. The 1-alkenes having 4 to 10 carbon atoms include the linear and branched alkenes such as, for example, 1-butene, isobutylene, 1-pentene, 3-methyl-1-butene, 1-hexene, 3,4-dimethyl-1-butene, 1-heptene, and 3-methyl-1-hexene. Examples of dienes having 4 to 10 carbon atoms include 1,3-butadiene, 1,4-pentadiene, isoprene, 1,5-hexadiene, and 2,3-dimethyl-1,3-hexadiene. Ethylenically unsaturated monomers other than propylene may be included in the propylene interpolymer of the foamable propylene polymer composition such as vinylacetate, methylacrylate, ethylacrylate, methyl methacrylate, acrylic acid, itaconic acid, maleic acid, and maleic anhydride.

In a preferred embodiment the foamable propylene polymer composition comprises commercially available propylene homopolymers such as the high melt strength polypropylene Pro-fax™ PF814 (from Basell Polyolefins Company N.V., The Netherlands) or Daploy™ WD 130HMS (from Borealis A/S, Denmark)

Suitable non-propylenic polymers that may be used in the foamable propylene polymer composition include high, medium, low, and linear density polyethylenes, polybutene-1, ethylene/acrylic acid copolymer, ethylene/vinyl acetate copolymer, ethylene/propylene copolymer, styrene/butadiene copolymer, ethylene/styrene copolymer, ethylene/ethyl acrylate copolymer, and ionomer. The foamable propylene polymer composition may, if desired, contain other useful thermoplastics such as high density polyethylene, chlorinated polyethylene, thermoplastic olefin mixtures of EPDM rubbers (ethylene/propylene/diamine copolymers) and polyethylene. The foamable propylene polymer composition preferably comprises less than 20 weight percent non-propylenic polymer, more preferably less than 10 weight percent non-propylenic polymer and most preferably less than 5 weight percent non-propylenic polymer based upon the total weight of polymer in the foamable propylene polymer composition.

The propylene polymer of the foamable propylene polymer composition preferably has a weight average molecular weight of at least 100,000. Molecular weight can be measured by known procedures.

The propylene polymer of the foamable propylene polymer composition preferably has a melt strength of at least 5 centiNewtons (cN), more preferably at least 10 cN, and even more preferably at least 20 cN. Preferably, the propylene polymer has a melt strength not greater than 40 cN, more preferably not greater than 50 cN. The term "melt strength" throughout this description refers to a measurement of the tension in cN of a strand of molten polymer material extruded from a capillary die with a diameter of 2.1 mm and a length of 42 mm at 190° C. at a rate of 1.36 grams per minute (g/min) and stretched at a constant acceleration to determine the limiting draw force, or strength at break, using an apparatus known as a Goettfert Rheotens® melt tension apparatus available from Goettfert, Inc.

The propylene polymer preferably has a melt flow rate of between 0.5 and 7 and preferably between 2 and 4 dg/min. according to ASTM D1238 Condition L.

Additives are optionally included in the foamable propylene polymer composition, such as stabilizers including free radical inhibitors and ultraviolet wave (UV) stabilizers, neutralizers, nucleating agents, slip agents, anti-block agents, pigments, antistatic agents, clarifiers, waxes, resins, fillers such as nano-fillers, silica and carbon black, foam stabilizers and other additives within the skill in the art which are used in combination or alone. Effective amounts are known in the art and depend on parameters of the polymers in the composition and conditions to which they are exposed.

The foamable propylene polymer composition may optionally comprise a nucleating agent in order to control the size of foam cells. Useful nucleating agents are taught in US patent Nos. 6,417,242 column 11 line 63 to column 12 line 3. Preferred nucleating agents include inorganic substances such as calcium carbonate, talc, clay, titanium dioxide, silica, barium stearate, and diatomaceous earth. The amount of nucleating agent employed may range from 0.1 to 3 parts by weight per hundred parts by weight of a polymer resin. The preferred range is from 0.3 to 2 parts by weight.

The foamed polymer layer of the multilayer sheet of the present invention may be produced by vacuum foaming, by physical agitation of the foamable propylene composition mixture or by incorporating a blowing agent into the foamable propylene polymer composition. In a preferred embodiment a blowing agent is incorporated into the foamable propylene polymer composition.

The blowing agent which may be used is a physical blowing agent or a chemical blowing agent or a combination thereof. Physical blowing agents are generally compressed gases or liquids with low boiling points. Chemical blowing agents are generally solid chemical compounds which decompose and generate gas, such as nitrogen, ammonia or carbon dioxide.

Useful physical blowing agents are taught in US Patent Nos. 6,544,450 column 2 line 52 to column 3 line 6; 6,440,241 column 4 lines 17 to 31; 6,417,240 column 6 line 45 to column 7 line 7; and 6,251,319 column 4 line 38 to column 5 line. A preferred physical blowing agent comprises carbon dioxide. Carbon dioxide is preferably used in the practice of the present invention as a liquid, although use of the carbon dioxide gas would also be acceptable. Nitrogen is preferably used as a gas, while water is typically used as a liquid, although any form is acceptable.

Useful chemical blowing agents are taught in US Patent Nos. 6,417,240 column 7 lines 5 to 13; and 6,251,319 column 5 line 3 to 7. A preferred chemical blowing agent comprises mixtures of sodium bicarbonate and citric acid. The blowing agent may comprise both a physical blowing agent and a chemical blowing agent in any proportion. The blowing agent is generally incorporated into the molten foamable propylene polymer composition to prepare the foamed layer of the multilayer sheet. The amount of blowing agent incorporated into the molten foamable propylene composition is generally from 0.01 to 5, and preferably from 0.1 to 3 weight percent based on the total weight of blowing agent and foamable propylene polymer composition.

The multilayer sheet of the present invention comprises at least one non-foamed polymer layer wherein the non-foamed polymer layer comprises a non-foamed polymer composition comprising units derived from a 1-alkene monomer.

The term "non-foamed polymer composition" as used herein means a composition which is used to produce the non-foamed polymer layer of the multilayer sheet of the present invention and comprises a thermoplastic polymer in which at least 50 weight percent of its monomeric units are derived directly from a 1-alkene monomer, the non-foamed polymer composition further having a density of generally greater than or equal to 870 kilograms per cubic metre as measured according to ASTM-D-792.

Suitable 1-alkene monomers include ethylene, propylene, 1-butene, isobutylene, pentene-1, 3-methyl-1-butene, 1-hexene, 3,4-dimethyl-1-butene, 1-heptene, and 3-methyl-1- hexene. In a preferred embodiment the 1-alkene monomer is ethylene or propylene and in a most preferred embodiment the 1-alkene monomer is propylene.

As used herein, the term "olefinic homopolymers" means thermoplastic polymers derived from the reaction of a 1-alkene monomer, whereas the term "olefinic interpolymers" means thermoplastic polymers derived from the reaction of a 1-alkene monomer and at least one other monomer and includes, for example, random, block, and grafted copolymers and terpolymers.

The polymer of the non-foamed polymer composition may be comprised solely of one or more olefinic homopolymers, one or more olefinic interpolymers, blends of one or more of each of olefinic homopolymers and interpolymers, and blends of the previously mentioned polymers with polymers which do not comprise 1-alkenes. The polymer of the non-foamed polymer composition preferably comprises at least 50, even more preferably at least 75, and even more preferably 100, weight percent 1-alkene monomer derived units based upon the total weight of the polymer in the non-foamed polymer composition. In a preferred embodiment the 1-alkene monomer is propylene.

Suitable propylene-ethylene copolymers for use in the non-foamed polymer composition include VERSIFY™ Plastomers and Elastomers (available from The Dow Chemical Company).

The multilayer sheet of the present invention can be shaped by cutting and scoring. In a preferred embodiment the multilayer sheet is thermoformable to a desired shape, figure or contour. The term "thermoformable multilayer sheet" means that the multilayer sheet can be readily thermoformed or otherwise shaped under heat and mechanical pressure by any means known in the art to a different shape or contour. Oriented non-foamed polymer layers are generally not suitable for producing thermoformable multilayer sheets which can be shaped by cutting, scoring or creasing and which are subsequently thermoformed into complex shapes. Hence, in a preferred embodiment of the present invention the non-foamed polymer layer is not oriented.

Examples of commercially available polymers which are suitable for the producing the non-foamed polymer layer of the multilayer sheet of the present invention include propylene homopolymers such as H302-09RSB (The Dow Chemical Company, USA).

In a preferred embodiment the non-foamed polymer layer comprises a filler such as calcium carbonate, talc, clay, mica, wollastonite, hollow glass beads, titaninum oxide, silica, carbon black, glass fiber or potassium titanate. Preferred fillers are talc, wollastonite, clay, single layers of a cation exchanging layered silicate material or mixtures thereof. Talcs, wollastonites, and clays are generally known fillers for various polymeric resins. See for example U.S. Pat. No. 6,306,419 and 6,329,454, where these materials and their suitability as filler for polymeric resins are generally described.

The non-foamed polymer layer included within the scope of this invention generally utilizes such inorganic fillers with a number average particle size as measured by back scattered electron imaging using a scanning electron microscope of preferably less than or equal to 10 micrometers ($\mu$m), more preferably less than or equal to 3 $\mu$m. In general, smaller average particle sizes preferably equal to or greater than 0.001 $\mu$m, more preferably equal to or greater than 0.5 $\mu$m, if available, could very suitably be employed.

If a filler is used, it is generally employed in an amount of at least 1 part by weight, more preferably at least 10 parts by weight, and most preferably at least 15 parts by weight based on the total weight of the non-foamed polymer composition. Usually it has been found sufficient to employ an amount of filler up to and including 50 parts by weight, preferably up to and including 40 parts by weight, and most preferably up to and including 35 parts by weight, based the total weight of the non-foamed polymer composition.

Adhesives known in the art may be employed to adhere the layers of the multilayer foam sheet of the invention to each other or to other materials. Useful adhesives include thermoset adhesives such as polyurethane resins and epoxies and thermoplastic adhesives such as polyethylenes, polypropylenes, ethylene copolymers; and propylene copolymers. Useful adhesives are taught in U.S. Pat. Nos. 5,460,870 and 5,670,211. The adhesives may be applied by any means known in the art such as by spraying, coating, or in film form. Preferred adhesives are thermoplastic because of their lower cost and potential recyclability. In a preferred embodiment of the present invention the non-foamed polymer layer and the foamed propylene polymer layer adhere to each other so that no additional adhesive layer is required.

The multilayer sheet of the present invention comprises at least one foamed propylene polymer layer and at least one non-foamed polymer layer.

The density of the foamed propylene polymer layer is generally greater than or equal to 200 kilograms per cubic metre, more preferably greater than or equal to 250 kilograms per cubic metre, and most preferably greater than or equal to 300 kilograms per cubic metre as measured according to ASTM-D-3575-93 Suffix W Method B. The density of the foamed propylene polymer layer is generally less than or equal to 800 kilograms per cubic metre, more preferably less than or equal to 600 kilograms per cubic metre, and most preferably less than or equal to 500 kilograms per cubic metre as measured according to ASTM-D-3 575-93 Suffix W Method B.

In a preferred embodiment the thermoplastic polymer of the non-foamed polymer composition has at least 50 weight percent of its monomeric units derived directly from a propylene monomer, that is to say, the non-foamed polymer composition is a non-foamed propylene polymer composition.

In a preferred embodiment of the present invention the multilayer sheet comprises one layer based upon a foamed propylene polymer composition and two layers based upon a non-foamed propylene polymer composition. In a more preferred embodiment of the present invention the composition of the two layers based upon a non-foamed propylene polymer composition is the same. In an even more preferred embodiment of the present invention the multilayer sheet comprises one foamed propylene polymer layer sandwiched between two non-foamed polymer layers wherein the thermoplastic polymer of both non-foamed polymer layers is unoriented polypropylene. In a most preferred embodiment of the present invention the multilayer sheet comprises one foamed propylene polymer layer comprising high melt strength polypropylene sandwiched between two non-foamed polymer layers comprising unoriented polypropylene. The multilayer sheet of the present invention can be produced by methods generally known in the art such as co-extrusion, extrusion coating or lamination.

In a co-extrusion foaming process, the foamable propylene polymer composition is converted into a polymer melt and a blowing agent is generally incorporated to form a foamable gel. One then extrudes the foamable gel through a die and into a zone of reduced or lower pressure that promotes foaming to form the desired product. The reduced pressure is lower than that under which the foamable gel is maintained prior to extrusion through the die.

Before extruding foamable gel through the die, the foamable gel is cooled from a temperature that promotes melt mixing to a lower temperature which is generally within 30° centigrade (°C) of the melt temperature (T m) of the constituent polymers of the foamable composition.

The blowing agent may be incorporated or mixed into the polymer melt by any means known in the art such as with an extruder, mixer, or blender. The blowing agent is mixed with the polymer melt at an elevated pressure sufficient to prevent substantial expansion of the melt polymer material and to generally disperse the blowing agent homogeneously therein. Optionally, a nucleating agent may be blended in the polymer melt or dry blended with the polymer material prior to plasticizing or melting.

In the same process the non-foamed polymer composition is generally converted into a non-foamed polymer melt, generally without incorporation of a blowing agent. One then extrudes the non-foamed polymer melt through a slot extrusion die onto at least one surface of the foamed propylene polymer layer to form the multilayer sheet of the present invention.

The thickness of the sheet and the grammage may further be controlled by varying the speed at which the co-extruded multilayer sheet is pulled from the extrusion die. The speed at which the sheet is pulled from the die is generally known as the take-off rate, whereby a higher take-off rate generally leads to a lower sheet thicknesses and a lower grammage.

The multilayer sheets of the present invention are useful for the production of containers and packing, in complex forms and which were hitherto not producible by using carton board. A particular advantage of the multilayer sheet of the present invention is that it is suitable for shaping by cutting, scoring or creasing on a carton board conversion machine such as the Autoplaten® SP Evoline 102E plus (supplied by Bobst S.A., Switzerland) and for thermoforming into complex shapes. Other suitable carton board conversion machines include automatic flatbed die-cutter models such as the YT 1040NC or YT-1300NCS (supplied by Young Shin Machinery Co., Ltd, Korea), the automatic platen cutting and creasing machines of the production series TRP-802, TRP-1060, TRP-1300 or TRP-1435 (supplied by Sanwa Mfg. Co., Ltd, Japan), the automatic die-cutter and creaser machines models MJ-1030E, JF-660, JFB-1300, JF-1300, MJ-1030E, KFS-1020, KF-1020 or JFB-1030 (supplied by Iijima Mfg. Co., Ltd, Japan), the automatic platen presses models JR-105, JRK-105, SRK-144 (supplied by Iberica AG, SA, Spain) and the die cutting creasing machine model NFS-1050M (supplied by Sugano Mfg. Co., Ltd, Japan).

The processes of thermoforming to produce shaped articles are well known to those skilled in the art. A common method of thermoforming is vacuum forming. In this process the shaped articles produced by thermoforming the multilayer sheet can vary widely.

The multilayer sheet can be first cut, creased or scored and then thermoformed to form a template which may then be folded into the desired shape. Alternatively the multilayer sheet may first be subjected to thermoforming and then cut, creased or scored as appropriate. In most cases the latter process will require that the carton board machine is equipped with special cutting dies to accommodate the thermoformed shape so that in most cases it will be preferred to conduct the cutting creasing or scoring step first.

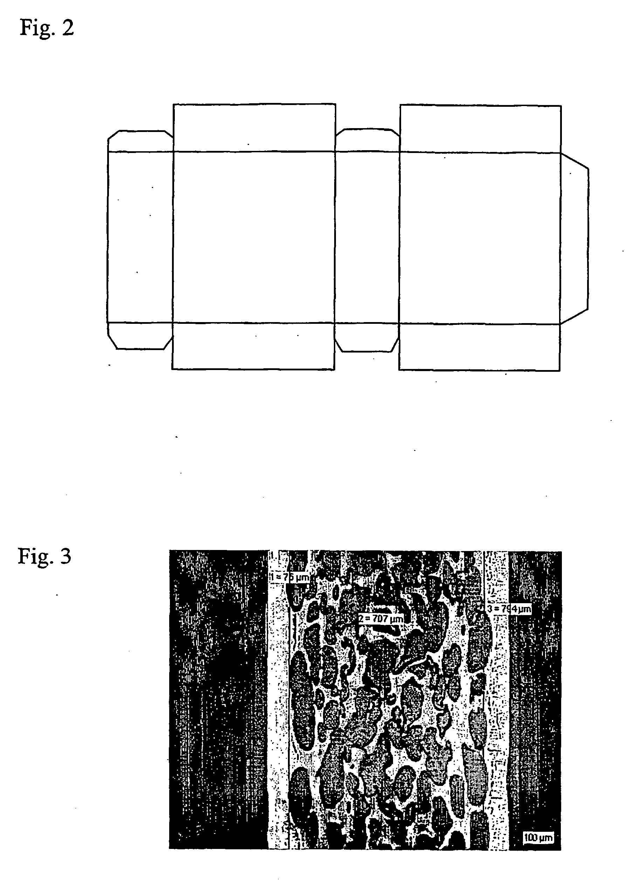

The articles of manufacture which may be produced using the multilayer sheet are of many types. Typical shapes that are utilizable include free-standing structures such as boxes, tubes, cylinders, trays, tubs, bowls, and cups, or embossed surfaces such as decorative panels, and novelty articles such as children's masks. Such articles may be adapted for use in the packaging of food, cosmetic and personal care products, cleaning and laundry products, pharmaceuticals and other household goods. The packages produced from this sheet may also be used as packaging to provide additional protection to packaged articles such as bottles, tubes, pouches, and liners, or may be used as a collation material for a collection of articles such a bottles or cans. In one embodiment of the present invention the article of manufacture is a packaging article comprising the multilayer sheet of the present invention and at least one crease or score mark. Fig. 2 is a diagram of a packaging article comprising a cut and creased multilayer sheet.

The packages produced from this multilayer sheet may also be used as packaging to provide additional protection to packaged articles, such as bottles, tubes, pouches and liner, or as a primary package, and may also be used as a collation material for the secondary packaging of a collection of bottles or cans.

Examples

Table 1 is a summary of the characteristics of multilayer sheets of the present invention which are exemplified in examples 1 to 6.

Examples 1 and 2 show that multilayer sheets of the present invention can be produced by co-extrusion and that the properties of the sheet can be adjusted as required so that the sheets can be used in carton board conversion machines.

Examples 3 and 4 show that multilayer sheets of the present invention can be produced by lamination and that the properties of the sheet can be adjusted as required so that the sheets can be used in carton board conversion machines.

Examples 5 and 6 show that the mean bending moment of the sheet can be independently adjusted for multilayer sheets of the present invention for applications which require particularly stiff sheets for use in carton board conversion machines. The use of particularly stiff sheets is preferred in many applications for which dimensional stability is an important property.

Table 1 Multilayer Sheet Characteristics

| Sample | Example 1 | Example 2 | Example 3 | Example 4 | Example 5 | Example 6 |
|---|---|---|---|---|---|---|
| Sheet Thickness T (mm) | 0.794 | 0.55 | 1.08 | 1.17 | 1.02 | 1:14 |
| Grammage G (g/m$^2$) | 388 | 245 | 342 | 408 | 319 | 400 |
| Mean Bending Moment S (mNm) | 45.5 | 10.4 | 51 | 63 | 66.5 | 85 |
| $2 \times 10^{-7}G^{3.1872}$ | 35.6 | 8.2 | 23.8 | 41.9 | 19.1 | 39.3 |
| $0.0021\, G^{1.7573}$ | 74.4 | 33.2 | 59.6 | 81.3 | 52.7 | 78.5 |
| Bending force for crease (N) | 1.98 | 0.845 | 0.95 | 2.0 | 1.11 | 2.76 |
| Max Sheet Curl C (mm) | 15 | 5 | 9 | 6 | 7 | 4 |
| Water Vapour Transmission rate (g/m$^2$ 24h) | | 1.13 | | | | |
| Oxygen Transmission Rate (cm$^3$/m$^2$ 24 h) | | 3253 | | | | |

Example 1

This example illustrates a method of producing a multilayer sheet of the present invention by a process of co-extrusion.

The apparatus for producing the foam comprises two extrusion lines, each extrusion line being equipped with a melter, mixer, extruder and cooler, wherein one extrusion line is use for producing the foamed-layer of the multilayer sheet and the other extrusion line is used for producing two non-foamed layers of the multilayer sheet. The apparatus also has a flat sheet co-extrusion die which comprises a 71.1cm (28 inch) flat slot for foam-extruding the foamable propylene polymer composition to form the central layer of the multilayer sheet. The die also has two outer slots on either side of the foam-extrusion slot for co-extruding the non-foamed polymer composition onto both sides of the foamed layer to form a multilayer sheet consisting of a foamed layer sandwiched between two non-foamed layers.

A polypropylene polymer is fed in granular form to the first extruder where it is mixed with additives to form a foamable propylene polymer composition. The polypropylene polymer used is Pro-fax™ PF814. Pro-fax™ PF814 is a high melt strength polypropylene resin with a melt flow rate of 3 dg/min as measured by test method ASTM D-1238. The feed rate of the polypropylene polymer is 32 kg per hour. Additionally, 0.3 kg of a citric acid / sodium bicarbonate blowing agent is added per one hundred kg of foamable propylene polymer composition. The extruder conditions range from 180 °C at the feed end of the extruder to 200 °C at the conveying end of the extruder. The polymer and additives melt is conveyed to the mixer where 0.3 parts by weight of carbon dioxide blowing agent per 100 parts by weight foamable polymer composition is incorporated therein under pressure to form a foamable gel. The foamable gel is set to 200 °C and conveyed to the die under pressure where it expands out of the flat sheet die orifice to an area of lower pressure (normal atmospheric pressure).

Simultaneously, a polypropylene polymer is fed in granular form to the second extrusion line. The polypropylene polymer used is H302-09RSB (from The Dow Chemical Company). HS302-09RSB is a propylene homopolymer with a melt flow rate of 9.5 dg/min as measured by test method ISO 1133. The total feed rate of the propylene homopolymer polymer is 19 kg per hour. The extruder conditions range from 170 °C at the feed end of the extruder to 180 °C at the conveying end of the extruder. The non-foamed propylene homopolymer is conveyed from the extruder to a manifold which divides the stream into two approximately equal streams which are fed to the two outer slots of the flat sheet co-extrusion die, where it flows out of the flat sheet die orifice onto both sides of the foamed layer. The die block is maintained at a temperature of 200 °C.

The take-off rate from the die is set to 129 metres per hour.

The distribution of layers of the sheet is measured by optical microscopy. The layers are very uniform, the foamed layer having a thickness of 0.632 mm and the two non-foamed layers having thicknesses of 0.075 mm and 0.087 mm respectively.

### Example 2

This example illustrates that multilayer sheets of the present invention can be produced by coextrusion.

The multilayer sheet of example 2 is produced by essentially the same method as described in example 1 except that the take-off rate is about 230 metres per hour. The total thickness of the multilayer sheet produced is 0.55 millimetres and the grammage of sheet produced is 245 grams per square metre.

### Example 3

The multilayer sheet of example 3 is produced by a method of extrusion lamination. The multilayer sheet comprises a foamed-layer sandwiched between two non-foamed layers. The foamed layer is produced by extrusion using a foamable gel composition similar to that described in example 1. The non-foamed layers are cast film made from H302-09RSB polypropylene (available from the Dow Chemical Company) The thickness of the cast film is 80 micrometres.

The multilayer sheet is formed by extrusion laminating a layer of the cast film to each side of the foamed layer using Adflex™ X 100 G Thermoplastic Polyolefin Elastomer (available from Basell Polyolefins N.V., The Netherlands) applying 40 grams per square metre of the Adflex™ 100 G Thermoplastic Polyolefin Elastomer to each surface of the foamed layer.

### Example 4

The multilayer sheet of example 4 is produced by essentially the same method as described in example 3 except that the foamed layer selected has a higher thickness and density than in example 3. The grammage of the multilayer sheet thus produced is 400 grams per square metre.

### Comparative Example 5

The multilayer sheet of example 5 is produced by the same method as described in example 3 except that the non-foamed layers are cast film made from H302-09RSB polypropylene (available from the Dow Chemical Company) and 30 weight-percent Polybatch™ RTP 1097 filler concentrate (available from A.Schulman, Inc).

### Comparative Example 6

The multilayer sheet of example 6 is produced by the same method as described in example 5 except that the thickness and density of the foamed layer are increased. The total thickness of the multilayer sheet thus produced is 1.14 millimetres and the grammage of the multilayer sheet thus produced is 400 grams per square metre.

## Claims

1. A multilayer sheet comprising at least one foamed propylene polymer layer and at least one non-foamed polymer layer, and wherein the non-foamed polymer layer comprises a polymer, comprising units derived from an 1-alkene monomer, and is an unfilled layer and
   wherein the multilayer sheet has properties which satisfy the following relationships:

$$0.2 < T < 2 \qquad (1a),$$

wherein T is the total thickness of the multilayer sheet, measured according to ASTM D645-97, and expressed in millimetres; and

$$100 < G < 500 \qquad (1b),$$

wherein G is the grammage of the multilayer sheet determined according to ASTM D646-96, and expressed in grams per square metre; and

$$S \geq 2 \times 10^{-7}\ G^{3.1872} \qquad (1c),$$

wherein S is the geometric mean bending moment of the multilayer sheet, expressed in milliNewton metres, and calculated from the following relationship:

$$S = (Sm\ Sc)^{0.5} \qquad (1d),$$

wherein Sm is the maximum bending moment in the plane of the multilayer sheet, expressed in milliNewton metres, and determined according to the two-point method described in DIN 53121 : 1996-12, and Sc is the bending moment measured perpendicularly to the direction of Sm in the plane of the multilayer sheet, and expressed in milliNewton metres, and determined according to the two-point method described in DIN 53121 : 1996-12.

2. The multilayer sheet of claim 1, wherein the geometric mean bending moment of the multilayer sheet, S, satisfies the following relationship:

$$S \geq 0.0021\ G^{1.7573} \qquad (2).$$

3. The multilayer sheet according to claim 1, wherein the multilayer sheet comprises a crease.

4. The multilayer sheet of claim 3, wherein the average bending force, F, which is required to maintain the angle of the crease at 90 degrees, is less than 3 Newton.

5. The multilayer sheet according to any of the claims 1, to 4, wherein the multilayer sheet has a maximum sheet curl, C, of less than 20 millimetres.

6. The multilayer sheet according to any of the claims 1 to 5, wherein the non-foamed polymer layer comprises a polymer, comprising units derived from propylene.

7. A multilayer sheet comprising at least one foamed propylene polymer layer and at least one non-foamed polymer layer, and wherein the non-foamed polymer layer comprises a polymer, comprising units derived from an 1-alkene monomer, and is a filled layer, prepared from a polymer composition comprising up to 40 weight percent of a filler based on the total weight of the composition, and wherein the multilayer sheet has properties which satisfy the following relationships:

$$0.2 < T < 2 \qquad (1a),$$

wherein T is the total thickness of the multilayer sheet, measured according to ASTM D645-97, and expressed in millimetres; and

$$100 < G < 500 \qquad (1b),$$

wherein G is the grammage of the multilayer sheet determined according to ASTM D646-96, and expressed in grams per square metre; and

$$S \geq 2 \times 10^{-7} \, G^{3.1872} \qquad (1c),$$

wherein S is the geometric mean bending moment of the multilayer sheet, expressed in milliNewton metres, and calculated from the following relationship:

$$S = (Sm \; Sc)^{0.5} \qquad (1d),$$

wherein Sm is the maximum bending moment in the plane of the multilayer sheet, expressed in milliNewton metres, and determined according to the two-point method described in DIN 53121 : 1996-12, and Sc is the bending moment measured perpendicularly to the direction of Sm in the plane of the multilayer sheet, and expressed in milliNewton metres, and determined according to the two-point method described in DIN 53121 : 1996-12.

8. The multilayer sheet according to claim 1 or 7 wherein the thickness of sheet T is from 0.5 to 1.5 mm.

9. The multilayer sheet according to any of the claims 1 to 8, wherein the multilayer sheet is thermoformable.

10. An article comprising the multilayer sheet of any of the claims 1 to 9.

11. The article of claim 10, wherein the article is a packaging article.

12. The article of claims 10 or 11, wherein the article comprises at least one crease or score mark.

**Patentansprüche**

1. Mehrlagige Folie, die mindestens eine geschäumte Propylenpolymerschicht und mindestens eine nicht geschäumte Polymerschicht umfasst, und wobei die nicht geschäumte Polymerschicht ein Polymer umfasst, das von einem 1-Alkenmonomer hergeleitete Einheiten umfasst, und eine ungefüllte Schicht ist, und wobei die mehrlagige Folie Eigenschaften besitzt, die den folgenden Beziehungen genügen:

$$0,2 < T < 2 \qquad (1a),$$

worin T die Gesamtdicke der mehrlagigen Folie ist, gemessen nach ASTM D645-97 und ausgedrückt in Millimeter; und

$$100 < G < 500 \tag{1b},$$

worin G das Flächengewicht der mehrlagigen Folie ist, ermittelt nach ASTM D646-96 und ausgedrückt in Gramm pro Quadratmeter; und

$$S \geq 2 \times 10^{-7}\, G^{3,1872} \tag{1c},$$

worin S das mittlere geometrische Biegemoment der mehrlagigen Folie ist, ausgedrückt in Millinewtonmeter und berechnet anhand der folgenden Beziehung:

$$S = (S_m\, S_c)^{0,5} \tag{1d},$$

worin Sm das maximale Biegemoment in der Ebene der mehrlagigen Folie ist, ausgedrückt in Millinewtonmeter und ermittelt nach dem in DIN 53121 : 1996-12 beschriebenen Zweipunkt-Verfahren, und Sc das senkrecht zur Richtung von Sm in der Ebene der mehrlagigen Folie gemessene Biegemoment ist, ausgedrückt in Millinewtonmeter und ermittelt nach dem in DIN 53121 : 1996-12 beschriebenen Zweipunkt-Verfahren.

2. Mehrlagige Folie nach Anspruch 1, wobei das mittlere geometrische Biegemoment der mehrlagigen Folie, S, der folgenden Beziehung genügt:

$$S \geq 0,0021\, G^{1,7573} \tag{2}.$$

3. Mehrlagige Folie nach Anspruch 1, wobei die mehrlagige Folie eine Rillung umfasst.

4. Mehrlagige Folie nach Anspruch 3, wobei die durchschnittliche Biegekraft, F, die erforderlich ist, um den Winkel der Rillung auf 90 Grad zu halten, kleiner ist als 3 Newton.

5. Mehrlagige Folie nach einem der Ansprüche 1 bis 4, wobei die mehrlagige Folie eine maximale Folienwellung, C, von weniger als 20 Millimeter besitzt.

6. Mehrlagige Folie nach einem der Ansprüche 1 bis 5, wobei die nicht geschäumte Polymerschicht ein Polymer umfasst, das von Propylen hergeleitete Einheiten umfasst.

7. Mehrlagige Folie, die mindestens eine geschäumte Propylenpolymerschicht und mindestens eine nicht geschäumte Polymerschicht umfasst, und wobei die nicht geschäumte Polymerschicht ein Polymer umfasst, das von einem 1-Alkenmonomer hergeleitete Einheiten umfasst, und eine gefüllte Schicht ist, hergestellt aus einer Polymerzusammensetzung, die bis zu 40 Gew.-% eines Füllstoffs umfasst, bezogen auf das Gesamtgewicht der Zusammensetzung, und wobei die mehrlagige Folie Eigenschaften besitzt, die den folgenden Beziehungen genügen:

$$0,2 < T < 2 \tag{1a},$$

worin T die Gesamtdicke der mehrlagigen Folie ist, gemessen nach ASTM D645-97 und ausgedrückt in Millimeter; und

$$100 < G < 500 \qquad\qquad (1b),$$

worin G das Flächengewicht der mehrlagigen Folie ist, ermittelt nach ASTM D646-96 und ausgedrückt in Gramm pro Quadratmeter; und

$$S \geq 2 \times 10^{-7}\, G^{3,1872} \qquad\qquad (1c),$$

worin S das mittlere geometrische Biegemoment der mehrlagigen Folie ist, ausgedrückt in Millinewtonmeter und berechnet anhand der folgenden Beziehung:

$$S = (Sm\ Sc)^{0,5} \qquad\qquad (1d),$$

worin Sm das maximale Biegemoment in der Ebene der mehrlagigen Folie ist, ausgedrückt in Millinewtonmeter und ermittelt nach dem in DIN 53121 : 1996-12 beschriebenen Zweipunkt-Verfahren, und Sc das senkrecht zur Richtung von Sm in der Ebene der mehrlagigen Folie gemessene Biegemoment ist, ausgedrückt in Millinewtonmeter und ermittelt nach dem in DIN 53121 : 1996-12 beschriebenen Zweipunkt-Verfahren.

**8.** Mehrlagige Folie nach Anspruch 1 oder 7, wobei die Dicke der Folie T von 0,5 bis 1,5 mm beträgt.

**9.** Mehrlagige Folie nach einem der Ansprüche 1 bis 8, wobei die mehrlagige Folie thermoformbar ist.

**10.** Gegenstand, der die mehrlagige Folie nach einem der Ansprüche 1 bis 9 umfasst.

**11.** Gegenstand nach Anspruch 10, wobei der Gegenstand ein Verpackungsgegenstand ist.

**12.** Gegenstand nach Anspruch 10 oder 11, wobei der Gegenstand mindestens eine Rillung oder Ritzung umfasst.

**Revendications**

**1.** Feuille multicouche, comprenant au moins une couche de polymère de propylène expansé en mousse et au moins une couche de polymère non expansé en mousse, dans laquelle la couche de polymère non expansé comprend un polymère comportant des motifs dérivés d'un monomère de type 1-alcène et est une couche non chargée, laquelle feuille multicouche possède des propriétés qui obéissent aux relations suivantes :

$$0,2 < T < 2 \qquad\qquad (1a)$$

dans laquelle T représente l'épaisseur totale de la feuille multicouche, mesurée selon la norme ASTM D 645-97 et exprimée en millimètres ;

$$100 < G < 500 \qquad\qquad (1b)$$

dans laquelle G représente le grammage de la feuille multicouche, mesuré selon la norme ASTM D 646-96 et exprimé en grammes par mètre carré ;
et

$$S \geq 2.10^{-7}\, G^{3,1872} \qquad (1c)$$

dans laquelle S représente la moyenne géométrique du moment de flexion de la feuille multicouche, exprimée en millinewton.mètres et calculée à l'aide de la relation suivante :

$$S = (Sm.Sc)^{0,5} \qquad (1d)$$

dans laquelle Sm représente le moment maximal de flexion dans le plan de la feuille multicouche, exprimé en millinewton.mètres et déterminé selon la méthode à deux points décrite dans la norme DIN 53121 (1996-12), et Sc représente le moment de flexion mesuré, dans le plan de la feuille multicouche, dans la direction perpendiculaire à celle de la mesure de Sm, exprimé en millinewton.mètres et déterminé selon la méthode à deux points décrite dans la norme DIN 53121 (1996-12).

2. Feuille multicouche conforme à la revendication 1, dans laquelle la moyenne géométrique S du moment de flexion obéit à la relation suivante :

$$S \geq 0,0021\, G^{1,7573} \qquad (2)$$

3. Feuille multicouche conforme à la revendication 1, laquelle feuille multicouche porte une ligne de pliage.

4. Feuille multicouche conforme à la revendication 3, pour laquelle la force de flexion F nécessaire pour maintenir à 90° l'angle de pliage est inférieure à 3 newtons.

5. Feuille multicouche conforme à l'une des revendications 1 à 4, laquelle feuille multicouche présente un roulage maximal, C, inférieur à 20 millimètres.

6. Feuille multicouche conforme à l'une des revendications 1 à 5, dans laquelle la couche de polymère non expansé comprend un polymère qui comporte des motifs dérivés du propylène.

7. Feuille multicouche, comprenant au moins une couche de polymère de propylène expansé en mousse et au moins une couche de polymère non expansé en mousse, dans laquelle la couche de polymère non expansé comprend un polymère comportant des motifs dérivés d'un monomère de type 1-alcène et est une couche chargée, préparée à partir d'une composition de polymère comprenant une charge, en une quantité représentant jusqu'à 40 % du poids total de la composition,
laquelle feuille multicouche possède des propriétés qui obéissent aux relations suivantes :

$$0,2 < T < 2 \qquad (1a)$$

dans laquelle T représente l'épaisseur totale de la feuille multicouche, mesurée selon la norme ASTM D 645-97 et exprimée en millimètres ;

$$100 < G < 500 \qquad (1b)$$

dans laquelle G représente le grammage de la feuille multicouche, mesuré selon la norme ASTM D 646-96 et exprimé en grammes par mètre carré ;
et

$$S \geq 2.10^7\, G^{3,1872} \qquad (1c)$$

dans laquelle S représente la moyenne géométrique du moment de flexion de la feuille multicouche, exprimée en millinewton.mètres et calculée à l'aide de la relation suivante :

$$S = (Sm.Sc)^{0,5} \qquad\qquad (1d)$$

dans laquelle Sm représente le moment maximal de flexion dans le plan de la feuille multicouche, exprimé en millinewton.mètres et déterminé selon la méthode à deux points décrite dans la norme DIN 53121 (1996-12), et Sc représente le moment de flexion mesuré, dans le plan de la feuille multicouche, dans la direction perpendiculaire à celle de la mesure de Sm, exprimé en millinewton.mètres et déterminé selon la méthode à deux points décrite dans la norme DIN 53121 (1996-12).

8. Feuille multicouche conforme à la revendication 1 ou 7, dont l'épaisseur T vaut de 0,5 à 1,5 mm.

9. Feuille multicouche conforme à l'une des revendications 1 à 8, laquelle feuille multicouche est thermoformable.

10. Article comprenant une feuille multicouche conforme à l'une des revendications 1 à 9.

11. Article conforme à la revendication 10, lequel article est un article d'emballage.

12. Article conforme à la revendication 10 ou 11, lequel article porte au moins une ligne ou marque de pliage.

Fig 1.

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0353496 A
- US 6544450 B
- US 6440241 B
- US 6417242 B
- US 6417240 B
- US 6251319 B
- US 6306419 B
- US 6329454 B
- US 5460870 A
- US 5670211 A